# EUROPEAN PATENT APPLICATION

(11) **EP 4 684 986 A1**
(43) Date of publication of application: **28.01.2026**
(21) Application number: 24191203.9
(22) Date of filing: 26.07.2024
(51) Int. Cl.: B60G 15/06, B60G 99/00

(54) **SHOCK ABSORBER AND CAB SUSPENSION FOR A VEHICLE**

(71) Applicant: VOLVO TRUCK CORPORATION, 405 08 Göteborg (SE)
(72) Inventor: GIBOUDEAU, Julien, 69580 SATHONAY VILLAGE (FR)
(74) Representative: Lavoix

(57) **Abstract**

A shock absorber (8), comprising a distal attachment (11), comprising a flexible bush (19) and an inner sleeve (20): coaxial with a distal axis (X11) transversal to a main axis (R8) crossing the proximal attachment (10) and the distal attachment (11); configured for attaching the shock absorber (8) to a distal mounting (7) of the vehicle (1), by fixedly securing the inner sleeve (20) to the distal mounting (7); and comprising a lateral end surface (27) and a first anti-rotation element (30; 130), protruding from and/or recessed from the lateral end surface (27), parallel to the distal axis (XII), for imposing a single rotational position of the inner sleeve (20) around the distal axis (XII), relative to the distal mounting (7), when the inner sleeve (20) is secured to the distal mounting (7).

## Description

### TECHNICAL FIELD

The disclosure relates generally to vehicle suspension systems. In particular aspects, the disclosure relates to a shock absorber, a cab suspension for a vehicle, comprising said shock absorber and a vehicle comprising said cab suspension. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A known vehicle includes a cab, a chassis and shock absorbers connecting the cab to the chassis so that the cab is suspended over the chassis by the shock absorbers. During assembly of the vehicle, the shock absorbers are assembled to a bottom of the cab, forming a sub-assembly that is then lifted over the chassis. The sub-assembly is then lowered for positioning the lower ends of the shock absorbers onto their respective connections on the chassis. However, the shock absorbers need to have a specific orientation relative to the cab when assembled to the cab, so that their lower end matches with the connections on the chassis when the sub-assembly is positioned over the chassis. To that end, a temporary jig is usually implemented for positioning and maintaining the shock absorbers in the correct orientation when assembled to the cab, until the assembly is positioned onto the chassis and the shock absorbers secured thereto.

### SUMMARY

According to a first aspect of the disclosure, the invention relates to a shock absorber, for a vehicle, wherein the shock absorber is movable between a compressed configuration and a released configuration and comprises:
- a proximal attachment, for attaching the shock absorber to a proximal mounting of the vehicle; and
- a distal attachment, which is brought closer to the proximal attachment when the shock absorber is moved from the released configuration to the compressed configuration, the distal attachment comprising a flexible bush and an inner sleeve received within the flexible bush or formed integrally with the flexible bush,
wherein the inner sleeve:
- is coaxial with a distal axis transversal to a main axis crossing the proximal attachment and the distal attachment;
- is configured for attaching the shock absorber to a distal mounting of the vehicle, by fixedly securing the inner sleeve to the distal mounting; and
- comprises a lateral end surface and a first anti-rotation element, protruding from and/or recessed from the lateral end surface, parallel to the distal axis, for imposing a single rotational position of the inner sleeve around the distal axis, relative to the distal mounting, when the inner sleeve is secured to the distal mounting.

The first aspect of the disclosure may seek to facilitate assembly of the vehicle. A technical benefit may include that the first anti-rotation element may match with a corresponding second anti-rotation element provided on the distal mounting, thereby ensuring that the distal attachment, and thus the shock absorber, is in a predetermined and desired orientation relative to the distal mounting, when received in the distal mounting. Since the shock absorber is correctly oriented relative to the distal mounting, assembly of the proximal mounting is easier, insofar as an assembly including the distal mounting and the shock absorber is more easily positioned for assembly of the proximal attachment with the proximal mounting, in particular without using a jig.

Optionally in some examples, including in at least one preferred example, the first anti-rotation element comprises a first distal indent and a first proximal indent, diametrically opposed to each other relative to the distal axis, either both protruding from the lateral end surface or both recessed from the lateral end surface, wherein the first distal indent is arranged away from the proximal attachment and wherein the first proximal indent is arranged towards the proximal attachment. A technical benefit may include that the first distal indent and the first proximal indent enable easy positioning of the distal attachment into the distal mounting, by insertion of the distal attachment into the distal mounting along a diametric axis defined by the first distant indent and the second distal indent.

Optionally in some examples, including in at least one preferred example, the first proximal indent comprises first proximal oblique walls converging away from the distal axis. A technical benefit may include guiding the insertion of the distal attachment into the distal mounting and/or centering and positioning of the distal attachment when received in the distal mounting.

Optionally in some examples, including in at least one preferred example the first distal indent is a pin protruding from the lateral end surface, parallel to the distal axis, and the first proximal indent is a pin protruding from the lateral end surface, parallel to the distal axis. A technical benefit may include that the shock absorber is able to be mounted not only to the distal attachment having a second anti-rotation element matching with the first anti-rotation element for rotational interlocking of the first and second anti-rotation element, but also to a standard distal attachment. Also a standard shock absorber that would be devoid of such pins is still allowed to be mounted into the distal mounting in lieu of the shock absorber described therein.

Optionally in some examples, including in at least one preferred example the first distal indent is a notch recessed from the lateral end surface, parallel to the distal axis, and the first proximal indent is a notch recessed from the lateral end surface, parallel to the distal axis. A technical benefit may include that the shock absorber is only able to be mounted to the distal attachment having a second anti-rotation element matching with the first anti-rotation element for rotational interlocking of the first and second anti-rotation element. A standard shock absorber that would be devoid of such notches cannot be mounted into the distal mounting.

Optionally in some examples, including in at least one preferred example the notch of the first distal indent extends from an outer contour of the lateral end surface to an inner contour of the lateral end surface and wherein the notch of the first proximal indent extends from the inner contour of the lateral end surface. A technical benefit may include mounting the distal attachment into the distal mounting by insertion of the distal attachment into the distal mounting radially relative to the distal axis.

Optionally in some examples, including in at least one preferred example, the shock absorber further comprises a stem and a piston slidably fitted into each other and which are slid closer to each other when the shock absorber is moved from the released configuration to the compressed configuration. A technical benefit may include that the shock absorber is suitable for a cab suspension.

Optionally in some examples, including in at least one preferred example, the distal attachment is fixedly secured the stem and the proximal attachment is fixedly secured to the piston. A technical benefit may include that the shock absorber is suitable for a cab suspension where the stem attachment is secured to the distal mounting attached to a cab of the vehicle.

According to a second aspect of the disclosure, the invention relates to a cab suspension, comprising:
- at least one shock absorber as disclosed here-above; and
- the distal mounting, to which the inner sleeve of said at least one shock absorber is fixedly secured and comprising:
   - a lateral wall, to which the lateral end surface of said at least one shock absorber abuts parallel to the distal axis, and
   - a second anti-rotation element, protruding from and/or recessed from the lateral wall, rotationally interlocked with the first anti-rotation element of said at least one shock absorber, thereby imposing the single rotational position of the inner sleeve of said at least one shock absorber.

The second aspect of the disclosure may seek to facilitate assembly of the vehicle. A technical benefit may include that the first anti-rotation element matches with the second anti-rotation element provided on the distal mounting, thereby ensuring that the distal attachment, and thus the shock absorber, is in a predetermined and desired orientation relative to the distal mounting, when received in the distal mounting. Since the shock absorber is correctly oriented relative to the distal mounting, assembly of the proximal mounting is easier, insofar as an assembly including the distal mounting and the shock absorber is more easily positioned for assembly of the proximal attachment with the proximal mounting, in particular without using a jig.

Optionally in some examples, including in at least one preferred example, the second anti-rotation element comprises a second distal indent and a second proximal indent, diametrically opposed to each other relative to the distal axis; and the second anti-rotation element is rotationally interlocked with the first anti-rotation element in that the first distal indent and the second distal indent are axially engaged into each other, and in that the first proximal indent and the second proximal indent are axially engaged into each other. A technical benefit may include that the first distal indent and the first proximal indent enable easy positioning of the distal attachment into the distal mounting, by insertion of the distal attachment into the distal mounting along a diametric axis defined by the first distant indent and the second distal indent.

Optionally in some examples, including in at least one preferred example the second proximal indent comprises proximal oblique walls converging towards the distal axis. A technical benefit may include guiding the insertion of the distal attachment into the distal mounting and/or centering and positioning of the distal attachment when received in the distal mounting without the use of a jig.

Optionally in some examples, including in at least one preferred example, the second distal indent is a pin protruding from the lateral end surface, parallel to the distal axis, and the second proximal indent is a pin protruding from the lateral end surface, parallel to the distal axis. A technical benefit may include that the shock absorber is only able to be mounted to the distal attachment having a second anti-rotation element matching with the first anti-rotation element for rotational interlocking of the first and second anti-rotation element. A standard shock absorber that would be devoid of such notches cannot be mounted into the distal mounting.

Optionally in some examples, including in at least one preferred example, the pin of the second proximal indent forms an abutment end, wherein the notch of the first proximal indent is in radial abutment against the abutment end of the pin of the second proximal indent. A technical benefit may include easy obtaining a correct positioning of the distal attachment in the distal mounting without the use of a jig.

Optionally in some examples, including in at least one preferred example, the lateral wall includes a contour surface delineating the through hole, and the second distal indent is a notch recessed from the contour surface parallel to the distal axis, and the second proximal indent is a notch recessed from the contour surface parallel to the distal axis. A technical benefit may include that the shock absorber is able to be mounted not only to the distal attachment having a second anti-rotation element matching with the first anti-rotation element for rotational interlocking of the first and second anti-rotation element, but also to a standard distal attachment. Also a standard shock absorber that would be devoid of such pins is still allowed to be mounted into the distal mounting in lieu of the shock absorber described therein.

Optionally in some examples, including in at least one preferred example the distal mounting comprises a through hole formed through the lateral wall, coaxially with the distal axis; and the notch of the second proximal indent extends from a proximal edge of the lateral wall to the trough hole and wherein the notch of the second distal indent extends from the trough hole. A technical benefit may include that the distal attachment can be mounted inside the distal mounting by radial insertion of the distal attachment into the distal mounting.

Optionally in some examples, including in at least one preferred example, the notch of the second distal indent forms an abutment end and extends from the through hole to the abutment end, wherein the pin of the first distal indent is in radial abutment against the abutment end. A technical benefit may include easy obtaining a correct positioning of the distal attachment in the distal mounting without the use of a jig.

Optionally in some examples, including in at least one preferred example, the cab suspension further comprises a bolt coaxially inserted through the inner sleeve and the lateral wall; the bolt axially clamps the lateral wall against the lateral end surface; and an axial clearance is provided between the first anti-rotation element and the second anti-rotation element. A technical benefit may include that, while the single rotational position of the inner sleeve is ensured by matching of the first anti-rotation element and second anti-rotation element during manufacturing, thereby avoiding the use of a jig, clamping of the lateral wall against the lateral end surface ensures strong securing in rotation of the sleeve in the distal mounting in use. Hence, the sleeve is prevented from rotating around the distal axis relative to the lateral wall mainly by adherence of the lateral end surface against the lateral wall obtained by clamping.

According to a third aspect of the disclosure, the invention relates to a vehicle, comprising the cab suspension as mentioned above; a cab, to which the distal mounting is secured; and a chassis, to which the proximal attachment is secured. The third aspect of the disclosure may seek to facilitate assembly of the vehicle.

A technical benefit may include that the first anti-rotation element matches with the corresponding second anti-rotation element provided on the distal mounting, thereby ensuring that the distal attachment, and thus the shock absorber, is in a predetermined and desired orientation relative to the distal mounting, when received in the distal mounting. Since the shock absorber is correctly oriented relative to the distal mounting, assembly of the proximal mounting is easier, in particular if several shock absorbers are to be mounted, insofar as an assembly including the cab and the cab suspension is more easily positioned for assembly onto the chassis, in particular without using a jig.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a rear view of a cab suspension of a vehicle according to first embodiment of the invention.
**FIG. 2** is a perspective view of a partial cross section of FIG.1 along line II-II' shown in FIG. 1.
**FIG. 3** is a partial perspective view of a shock absorber of the cab suspension of FIG. 1.
**FIG. 4** is a partial perspective view of a distal attachment of the cab suspension of FIG. 1.
**FIG. 5** is a partial perspective view of a shock absorber of a cab suspension according to a second embodiment of the invention.
**FIG. 6** is a partial perspective view of a distal attachment of the cab suspension of FIG. 5.

### DETAILED DESCRIPTION

The detailed description set forth below provides information and examples of the disclosed technology with sufficient detail to enable those skilled in the art to practice the disclosure.

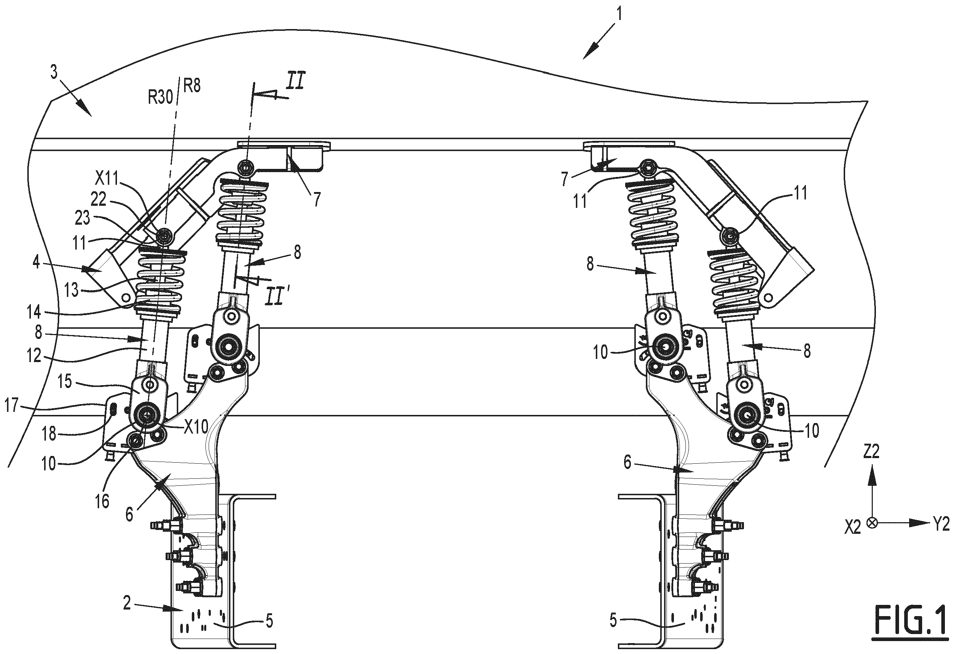

Figure 1 shows partially a vehicle 1, such as a truck, comprising a chassis 2, a cab 3, and a cab suspension 4, according to a first embodiment. The chassis 2 defines a frontward longitudinal direction X2, a lateral direction Y2 and an upward direction Z2, perpendicular to each other. The cab 3 is positioned over the chassis 2, i.e. in the upward direction Z2 relative to the chassis 2. The cab suspension 4 is interposed between the chassis 2 and the cab 3, along the upward direction Z2. The cab 3 is attached to the chassis 2 in a suspended manner by means of the cab suspension 4.

The vehicle 1 also includes wheels, not shown, carrying the chassis 2, for resting on a ground surface in a manner that the upward direction Z2 is approximately perpendicular to the ground surface. The vehicle 1 comprises a not-shown motor, for driving the wheels in rotation, hence moving the vehicle in the frontward direction X2 relative to the ground surface.

A not-shown driver person and/or a passenger can be positioned in the cab 3 for driving the vehicle 1 and/or to be transported by the vehicle 1.

The chassis 2 comprises two longitudinal beams 5 parallel to each other and to direction X2, by means of which the chassis 2 carries the cab 3 via the cab suspension 4. One of the beams 5 is in the direction Y2 relative to the other beam 5.

The cab suspension 4 comprises two proximal mountings 6, each fixedly secured to one of the beams 5 of the chassis 2. One of the proximal mountings 6 is arranged in the direction Y2 relative to the other. A different number of proximal mountings 6 can be provided. Since the proximal mountings 6 are at the bottom of the cab suspension 4, they may be designated as "lower mountings".

The cab suspension 4 comprises two distal mountings 7, each fixedly secured to the cab 3, in particular to a bottom surface of the cab 3. One of the distal mounting 7 is arranged in the direction Y2 relative to the other. A different number of distal mountings 7 can be provided. The mountings 7 are arranged in the direction Z2 relative to the mountings 6 and may thus be designated as "upper mountings".

The cab suspension 4 comprises four shock absorbers 8. A different number of shock absorbers 8 may be provided. Each shock absorber 8 connects one of the mountings 6 to one of the mountings 7, so that the cab 3 is suspended over the chassis 2 via the shock absorbers 8.

In the present example, the shock absorbers 8 are identical to each other. Each shock absorber 8 comprises a proximal attachment 10, a distal attachment 11, a piston 12, a stem 13 and a spring 14. The attachments 10 and 11 constitute opposite ends of the shock absorber 8 and are crossed by a main axis R8 of the shock absorber. For example, the axis R8 is perpendicular to the direction X2 and oblique relative to the directions Y2 and Z2.

The attachment 10 is fixedly secured to the piston 12, which is positioned coaxially with the axis R8 and oriented towards the attachment 11. The attachment 11 is fixedly secured to the stem 13, which is positioned coaxially with the axis R8 and oriented towards the attachment 10. The stem 13 is slidably fitted into the piston 12, so that the stem 13 can slide relative to the piston along axis R8. Consequently, the attachment 11 is slidable relative to the attachment 10 along the axis R8. The stem 13 and the piston 12 enclose an internal fluid, for generating a dampening force tending to oppose to the movement of the stem 13 relative to the piston 12 when the stem 13 slides away from the piston 12 and towards the piston 12 along axis R8. The spring 14 is axially interposed between an abutment surface of the stem 13 and an abutment surface of the piston 12, so as to exert an elastic force tending to move the stem 13 away from the piston along axis R8. The spring 14 is preferably a coil spring positioned coaxially around the stem 13 and the piston 12.

Overall, the shock absorber 8 is movable between a compressed configuration, where the attachments 10 and 11 are closest to each other, and a released configuration, where the attachments 10 and 11 are farthest from each other. In other words, the attachments 10 and 11 are slid closer to each other along axis R8 when the shock absorber 8 is moved from the released configuration to the compressed configuration.

The proximal attachment 10 attaches the shock absorber 8 to one of the proximal mountings 6. Preferably, the proximal attachment 10 is attached so that at least a part of the proximal attachment 10, fixedly attached to the piston 12, is pivotable relative to the proximal mounting 6 around a proximal axis X10, radial relative to the main axis R8. Preferably, the axis X10 is parallel to the direction X2.

To that end, the proximal attachment 10 preferably comprises two lugs 15 parallel to the axis R8 and distant from each other, and an axle 16 connecting the lugs 15 and coaxial to the axis X10, and the proximal mounting 6 preferably comprises a slotted portion 17 having a radial slot where the axle 16 is received. The lugs 15 are fixedly attached to the piston 12. In use, it may be provided that the axle 16 may rotate relative to the slotted portion 17 and/or that the lugs 15 rotate relative to the axle 16 about the axis X10.

The radial slot of the slotted portion 17 is preferably open radially relative to the axis X10, towards the cab 3, along the axis R8. The radial slotted portion 17 preferably comprises a latch 18, removably closing the radial slot and thus retaining the axle 16 within the radial slot of the slotted portion 17. In use of the vehicle, the latch 18 is in the closed position. However the latch 18 may be opened for enabling insertion and extraction of the attachment 10 into and from the mounting 6, for initial manufacturing and/or maintenance.

The distal attachment 11 attaches the shock absorber 8 to one of the distal mountings 7. Preferably, the distal attachment 11 is attached so that at least a part of the distal attachment 11, fixedly attached to the stem 13, is slightly orientable relative to the distal mounting 7 around a distal axis X11, radial relative to the main axis R8. Preferably, the axis X11 is parallel to the direction X2.

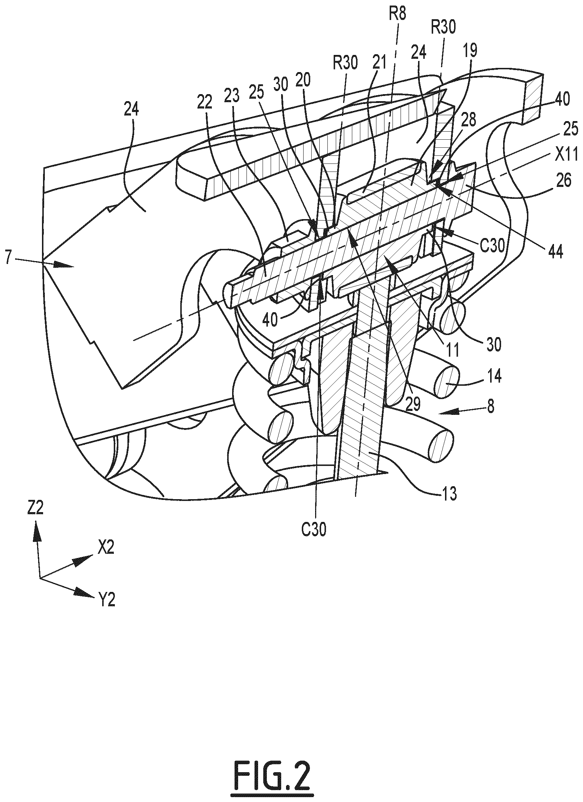

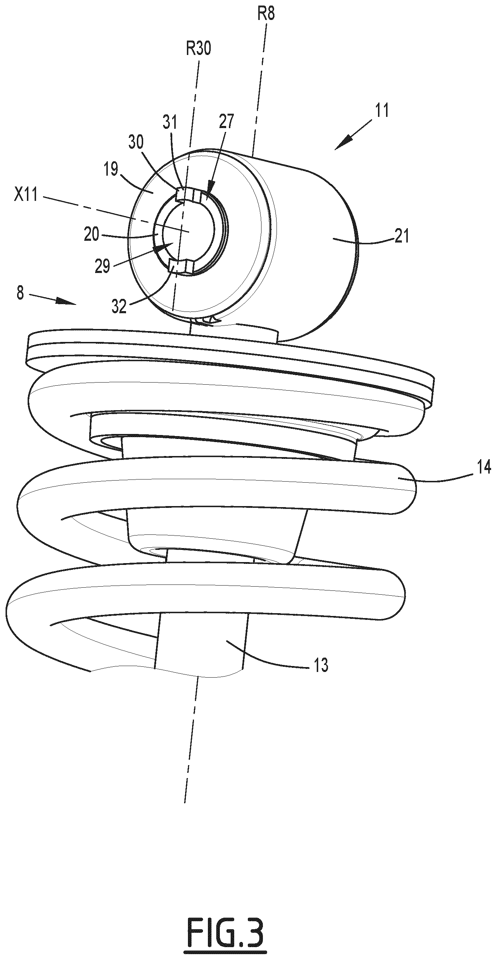

To that end, as shown in figures 2 and 3, the distal attachment 11 comprises a flexible bush 19, an inner sleeve 20 and an outer sleeve 21, which are tubular. The inner sleeve 20 and the bush 19 are coaxial with the axis X11. The flexible bush 19, the inner sleeve 20 and the outer sleeve 21 are crossed by the axis R8.

The flexible bush 19 is made of a flexible material, which is configured to be elastically deformed in use of the shock absorber for dampening vibrations, dimensional variations of the vehicle, and enable the stem 13 to be slightly orientable around the axis X11 relative to the mounting 7 when the shock absorber 8 moves between the compressed and released configurations.

The inner sleeve 20 is coaxially arranged inside the bush 19. The inner sleeve 20 is either a part that was assembled with the bush 19 and that was initially separate from the bush 19, or is integral with the bush 19 so that the sleeve 20 and the bush 19 are made from a single piece. Figure 2 shows a case where the bush 19 is integral with the sleeve 20.

If the sleeve 20 and the bush 19 are formed by a single piece, then the sleeve 20 is made of the same material than the bush 19. If the sleeve 20 is a separate part, it may be made of a different material than the bush 19, preferably a rigid material compared to the material of the bush 19, such as metal, and is preferably glued or otherwise immobilized in rotation around the axis X11 relative to the bush 19.

Since the sleeve 20 is tubular, the sleeve 20 defines a through hole 29, from one end of the sleeve 20 to the other, coaxially with the axis X11.

The outer sleeve 21 is coaxially arranged around the bush 19. The outer sleeve 21 is preferably made of a rigid material compared to the material of the bush 19, such as metal. When the bush 19 is not deformed, or is the least deformed, the sleeve 21 is preferably coaxial with, or parallel and close to, the axis X11. The outer sleeve 21 preferably glued or otherwise immobilized in rotation around the axis X11 relative to the bush 19.

The shock absorber 8 is attached to the distal mounting 7 by fixedly securing of the inner sleeve 20 to the distal mounting 7. To that end, as shown in figure 2, the distal mounting 7 preferably comprises two lateral walls 24, perpendicular to the axis X11, arranged at either side of the attachment 11, in particular at either sides of the sleeve 20. Each lateral wall 24 has a respective through hole 25, coaxial with the axis X11. The cab suspension 4 preferably comprises a bolt 22 and a nut 23. Depending on the situation, said bolt 22 and nut 23 can either be considered to belong to the mounting 7 or to the attachment 11. The bolt 22 is coaxially inserted through the through hole 25 of the first wall 24, the through hole 29 of the sleeve 20 and the through hole 25 of the second wall 24. The bolt 22 includes a head 26 abutting against the first wall 24 while the nut 23 is screwed onto an opposite end of the bolt 22, for abutting against the second wall 24, so that the walls 24 are arranged between the head 26 and the nut 23. The nut 23 is tightened so that the bolt 22 clamps the sleeve 20 between the walls 24, along the axis X11.

In particular, the sleeve 20 includes two opposite lateral end surfaces 27, best visible in figure 3, opposite to each other along the axis X11. Each surface 27 protrudes from the bush 19 along the axis X11. Each lateral surface 27 is perpendicular to the axis X11 and faces one of the walls 24. Each lateral surface 27 is annular shaped and centered on the axis X11. Each lateral surface 27 delineates a respective end of the through hole 29, by surrounding said respective end. Each surface 27 abuts against one of the walls 24 parallel to the axis X11, for said wall 24 to clamp the sleeve 20, while the bush 19 remains distant from said wall 24. The sleeve 21 also remains distant from said wall 24. More precisely, the surface 27 abuts against a part of the wall 24 which constitutes a contour surface 28, delineating the through hole 25. In other words, the contour surface 28 surrounds the through hole 25.

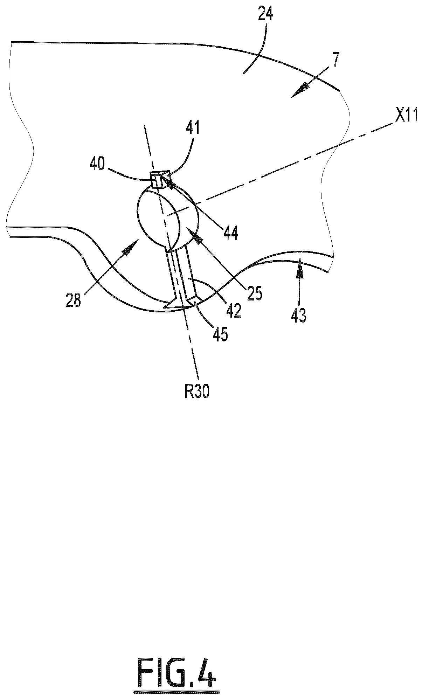

As shown in figures 2 and 3, the sleeve 20 also includes, for at least one of the lateral surfaces 27, preferably for both, a respective anti-rotation element 30. As shown in figures 2 and 4, a corresponding anti-rotation element 40 belonging to the distal mounting 7 is provided for the corresponding walls 24. In the present embodiment, the anti-rotation element 30 protrudes from the lateral end surface 27 while the anti-rotation element 40 is recessed from the contour surface 28 of the wall 24, parallel to the axis X11. The anti-rotation elements 30 and 40 of each pair are rotationally interlocked, thereby imposing a single rotational position of the inner sleeve 20 relative to the wall 24, around the axis X11. In other words, the anti-rotation elements 30 and 40 match, the anti-rotation element 30 being received in the anti-rotation element 40, thereby preventing the sleeve 20 to rotate relative to the mounting 7 around the axis X11.

As shown in figure 3, each anti-rotation element 30 comprises a distal pin 31, which constitutes a distal indent and a proximal pin 32, which constitutes a proximal indent. The pins 31 and 32 both protrude from the lateral end surface 27 along the axis X11. The pins 31 and 32 are diametrically opposed to each other relative to the distal axis X11. The pins 31 and 32 are arranged along a diametric axis R30, perpendicular to the axis X11 and crossing the axis X11. The axis R30 may be parallel to the axis R8, or slightly inclined relative to the axis R8. The pin 32 is arranged between the pin 31 and the proximal attachment 10. In other words, the distal indent is arranged away from the proximal attachment 10 and the proximal indent is arranged towards the proximal attachment 10.

As shown in figure 4, each anti-rotation element 40 comprises a distal notch 41, which constitutes a distal indent and a proximal notch 42, which constitutes a proximal indent. The notches 41 and 42 are both recessed from the contour surface 28 of the through hole 25 along the axis X11. The notches 41 and 42 are diametrically opposed to each other relative to the distal axis X11. The notches 41 and 42 are arranged along the diametric axis R30. The notch 42 is arranged between the notch 41 and the proximal attachment 10. In other words, the distal indent is arranged away from the proximal attachment 10 and the proximal indent is arranged towards the proximal attachment 10.

The anti-rotation element 40 is rotationally interlocked with the anti-rotation element 30 around the axis X11 in that the pin 31 is axially received into the notch 41, i.e. in that the distal indent of the sleeve 20 is axially engaged into the distal indent of the wall 24.

The anti-rotation element 40 is rotationally interlocked with the anti-rotation element 30 around the axis X11 also in that the pin 32 is axially received into the notch 42, i.e. in that the proximal indent of the sleeve 20 is axially engaged into the proximal indent of the wall 24.

The distal attachment 11 and the distal mounting 7 are configured so that, during assembly of the vehicle, the distal attachment 11 can be attached to the distal mounting 7 by insertion of the distal attachment 11 inside the distal mounting 7 along the axis R30.

Preferably, the notch 42 constituting the proximal indent of each anti-rotation element 40 extends along the axis R30, from a proximal edge 43 of the lateral wall 24 to the through hole 25. In other words, the notch 42 has open opposite ends, along the axis R30.

The proximal edge 43 of the lateral wall 24 delineates the wall 24. The notch 41, constituting the distal indent, extends from the through hole 25, i.e. has at least an open end at the through hole 25. The notch 41 has an abutment end 44, along the axis R30 and opposite to the through hole 25. The abutment end 44 is preferably formed by a wall perpendicular to the axis R30. The notch 41 extends from the through hole 25 to the abutment end 44 along the axis R30. The pin 31 received in the notch 41 abuts the abutment end 44 radially, i.e. along the axis R30.

More generally, during insertion of the distal attachment 11 along the axis R30, the pin 31 is first inserted into the notch 42 at the edge 43, then slides along the notch 42 along axis R30, then travels along the through hole 25, is received in the notch 41 and then abuts against the abutment end 44 of the notch 41. During insertion of the distal attachment 11 along the axis R30, the other pin 32 is received in the notch 42 before or at the same time than the pin 31 is received in the notch 41. When the pin 31 abuts the abutment end 44 along the axis R30, i.e. is in radial abutment, the attachment 11 is coaxial with the through hole 25.

To facilitate insertion of the pin 31 into the notch 42 along the axis R30, the notch 42 comprises proximal oblique walls 45, converging towards the axis X11. The oblique walls 45 are oblique relative to the axis R30. The oblique walls 45 are formed at en end of the notch 42, from the edge 43. More generally, the end of the notch 42 is flared, facilitating insertion of the pin 31 at the edge 43. Preferably, except for the oblique walls 45 and for the abutment end 44, the walls of the notches 41 and 42 are parallel to the axis R30.

While the lateral end surface 27 is clamped against the lateral wall 24, i.e. is in contact with the lateral wall 24, along the axis X11, an axial clearance C30, visible in figure 2, is provided between the anti-rotation elements 30 and 40. In other words, the anti-rotation elements 30 and 40 are not in contact axially, but are only rotationally interlocked and, preferably, in radial abutment.

For manufacturing the vehicle, the shock absorbers 8 are first attached to the distal mountings 7, previously fixedly secured to the vehicle cab 3. To that end, for each shock absorber 8, the distal attachment 11 is inserted into the corresponding distal mounting 7 along axis R30, between the walls 24. Preferably, to that end, each anti-rotation element 30 is inserted into the corresponding anti-rotation element 40 along the axis R30, thereby guiding the insertion of the shock absorber 8 into the mounting 7. The insertion is done until the absorber 8 is correctly positioned, i.e. with axis X11 of the distal attachment 11 coaxial with the through holes 25. The correct position is easy to reach, since it is reached with the anti-rotation element 30 abuts the anti-rotation element 40 along the axis R30 by abutment of the pin 31 against the abutment end 44. The correct position also includes that the sleeve 20, and more generally, the shock absorber 8, is correctly oriented relative to the mounting 7 and the cab 3, around the axis X11, thanks to the rotational interlocking of the anti-rotation elements 30 and 40. No jig is necessary for obtaining the correct positioning and orientation of the absorbers 8.

Then, the shock absorbers 8 are secured to the mountings 7. To that end, for each absorber 8, the bolt 22 is inserted into the hole 29 of the sleeve 20 via the through holes 25, coaxially with the axis X11. Then, the nut 23 is positioned onto the bolt 22 and tightened, until the sleeve 20 is clamped by the walls 24 along the axis X11. Although the elements 30 and 40 are still interlocked at that stage, the anti-rotation of the sleeve 20 relative to the mounting 7 around the axis X11 is now essentially ensured by the clamping. The elements 30 and 40 are preferably only intended to ensure correct orientation of the sleeve 20 before clamping, so that they are clamped with the correct orientation.

Then an assembly including the cab 3 and the shock absorbers 8 is positioned altogether over the chassis 2, to which the proximal mountings 6 were previously fixedly secured. The assembly is lowered so that the proximal attachments 10 are received into the proximal mountings 6. Again, no jig is needed, and the correct positioning of the shock absorber 8 relative to the cab 3 enables that the proximal attachments 10 are correctly positioned to match the proximal mountings 6. In detail, the axles 16 are inserted radially into the corresponding slotted portions 17, which are left open by the latches 18 at that time.

Then, the attachments 10 are secured to the mountings 6. To that end, the latches 18 are closed.

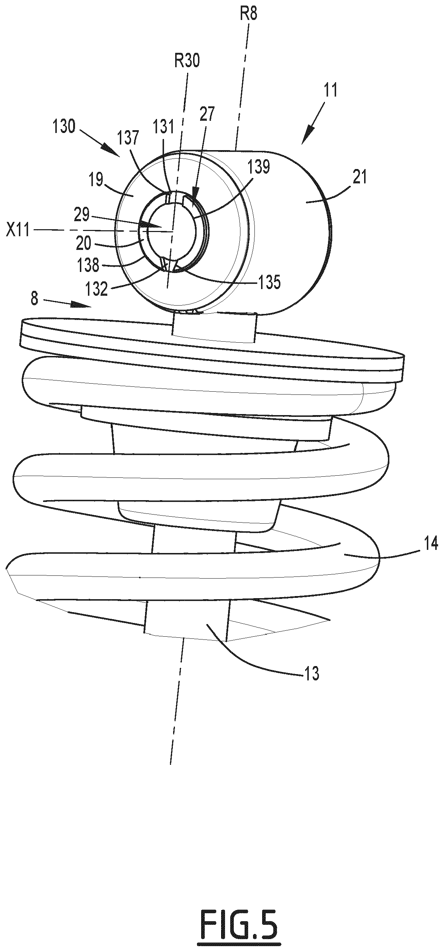

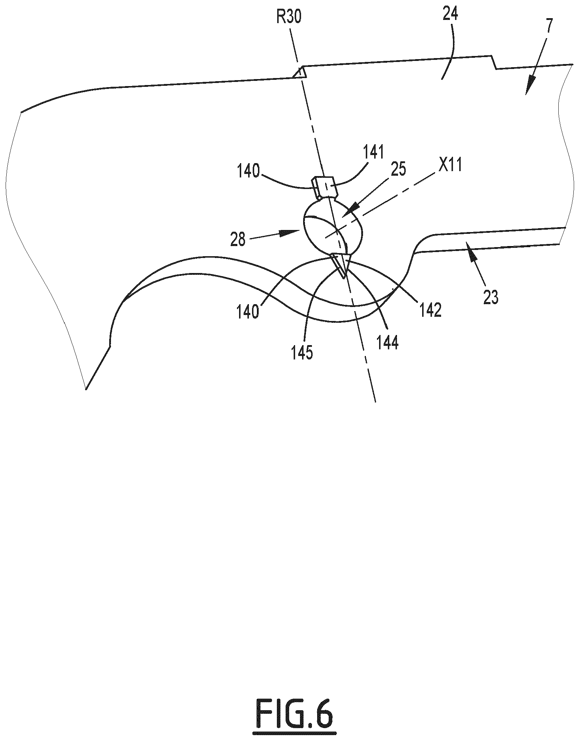

Figures 5 and 6 show an alternative embodiment including anti-rotation elements 130 and 140 replacing the anti-rotation elements 30 and 40, while all the other features of the vehicle 1 are identical.

As shown in figure 5, each anti-rotation element 130 comprises a distal notch 131, which constitutes a distal indent and a proximal notch 132, which constitutes a proximal indent. The notches 131 and 132 both recess from the lateral end surface 27 along the axis X11. The notches 131 and 132 are diametrically opposed to each other relative to the distal axis X11. The notches 131 and 132 are arranged along the diametric axis R30. The notch 132 is arranged between the notch 131 and the proximal attachment 10. In other words, the distal indent is arranged away from the proximal attachment 10 and the proximal indent is arranged towards the proximal attachment 10.

As shown in figure 6, each anti-rotation element 140 comprises a distal pin 141, which constitutes a distal indent and a proximal pin 142, which constitutes a proximal indent. The pins 141 and 142 both protrude from the contour surface 28 of the through hole 25 along the axis X11. The pins 141 and 142 are diametrically opposed to each other relative to the distal axis X11. The pins 141 and 142 are arranged along the diametric axis R30. The pin 142 is arranged between the pin 141 and the proximal attachment 10. In other words, the distal indent is arranged away from the proximal attachment 10 and the proximal indent is arranged towards the proximal attachment 10.

The anti-rotation element 140 is rotationally interlocked with the anti-rotation element 130 around the axis X11 in that the pin 141 is axially received into the notch 131, i.e. in that the distal indent of the sleeve 20 is axially engaged into the distal indent of the wall 24.

The anti-rotation element 140 is rotationally interlocked with the anti-rotation element 130 around the axis X11 also in that the pin 142 is axially received into the notch 132, i.e. in that the proximal indent of the sleeve 20 is axially engaged into the proximal indent of the wall 24.

Again, the distal attachment 11 and the distal mounting 7 are configured so that, during assembly of the vehicle 1, the distal attachment 11 can be attached to the distal mounting 7 by insertion of the distal attachment 11 inside the distal mounting 7 along the axis R30.

Preferably, the notch 131 constituting the distal indent of each anti-rotation element 130 extends along the axis R30, from an outer contour 138 of the lateral end surface 27 to an inner contour 139 of the lateral end surface 27. The inner contour 139 delimits the through hole 29 of the sleeve 20, i.e. the inner diameter of the sleeve 20, and the outer contour 138 delimits the outer diameter of the sleeve 20. In other words, the notch 131 has open opposite ends, along the axis R30.

The notch 132 constituting the proximal indent extends along the axis R30 from the inner contour 139, and, preferably, to the outer contour 138. In other words, at least the end of the notch 132 at the inner contour 139 is open.

During insertion of the distal attachment 11 along the axis R30, the pin 142 is first inserted into the notch 131, then slides along the notch 131 along axis R30, then travels along the through hole 29 of the sleeve 20, is received in the notch 132 and then abuts against an abutment end of the notch 132. During insertion of the distal attachment 11 along the axis R30, the other pin 141 is received in the notch 131 before or at the same time than the pin 142 is received in the notch 132. When the pin 142 abuts the abutment end along the axis R30, i.e. is in radial abutment, the attachment 11 is coaxial with the through hole 25.

The abutment end of the notch 132 is preferably formed by proximal oblique walls 135 converging away from the axis X11. The oblique walls 135 are oblique relative to the axis R30. The oblique walls 135, which could be formed only at en end of the notch 132, are formed all along the notch 132, from the contour 139 to the contour 138. The oblique walls 135 not only form the abutment end, but also facilitate insertion of the pin 142 in the notch 132. The notch 131 may also have oblique walls 137 converging towards the axis X11, i.e. having a flared end at the outer contour 138, for facilitating the insertion of the pin 142 and then of the pin 141 into the notch 131. Preferably, except for the oblique walls 135 and 137, the walls of the notches 131 and 132 are parallel to the axis R30.

To facilitate insertion of the pin 142 into the notch 131 along the axis R30 and to match with the oblique walls 135, the pin 142 also comprises proximal oblique walls 145, converging away from the axis X11. The oblique walls 145 are oblique relative to the axis R30. In other words, the pin 142 is flared or shaped like an arrow, facilitating insertion of the pin 142 into the notches 131 and 132. The oblique walls 145 can also be considered as an abutment end 144 along the axis R30, formed by the pin 142, i.e. by the proximal indent of the element 140. The abutment end 144 formed by the oblique walls 145 abuts the abutment end formed by the walls 135 along the axis R30.

Similarly to the embodiment of figures 1 to 3, the embodiment of figures 4 and 5 implies that, while the lateral end surface 27 is clamped against the lateral wall 24, i.e. is in contact with the lateral wall 24, along the axis X11, an axial clearance is provided between the anti-rotation elements 130 and 140.

In variant, the distal and proximal indents are not diametrically opposed, but still aligned with an axis parallel to the axis R30, or any other suitable arrangement, for enabling insertion of the attachment 11 into the mounting 7 along axis R30. Each of the anti-rotation element of the distal attachment and of the anti-rotation of the proximal attachment may have a single indent, or more than two indents, while still enabling insertion of the attachment 11 into the mounting 7 along the axis R30.

Example 1: A shock absorber 8, for a vehicle 1, wherein the shock absorber 8 is movable between a compressed configuration and a released configuration and comprises:
- a proximal attachment 10, for attaching the shock absorber 8 to a proximal mounting 6 of the vehicle 1; and
- a distal attachment 11, which is brought closer to the proximal attachment 10 when the shock absorber 8 is moved from the released configuration to the compressed configuration, the distal attachment 11 comprising a flexible bush 19 and an inner sleeve 20 received within the flexible bush 19 or formed integrally with the flexible bush 19,
wherein the inner sleeve 20:
- is coaxial with a distal axis X11 transversal to a main axis R8 crossing the proximal attachment 10 and the distal attachment 11;
- is configured for attaching the shock absorber 8 to a distal mounting 7 of the vehicle 1, by fixedly securing the inner sleeve 20 to the distal mounting 7; and
- comprises a lateral end surface 27 and a first anti-rotation element 30; 130, protruding from and/or recessed from the lateral end surface 27, parallel to the distal axis X11, for imposing a single rotational position of the inner sleeve 20 around the distal axis X11, relative to the distal mounting 7, when the inner sleeve 20 is secured to the distal mounting 7.

Example 2: The shock absorber 8 according to example 1, wherein the first anti-rotation element 30; 130 comprises a first distal indent 31; 131 and a first proximal indent 32; 132, diametrically opposed to each other relative to the distal axis X11, either both protruding from the lateral end surface 27 or both recessed from the lateral end surface 27, wherein the first distal indent 31; 131 is arranged away from the proximal attachment 10 and wherein the first proximal indent 32; 132 is arranged towards the proximal attachment 10.

Example 3: The shock absorber 8 according to example 2, wherein the first proximal indent 132 comprises first proximal oblique walls 135 converging away from the distal axis X 11.

Example 4: The shock absorber 8 according to any one of examples 2 or 3, wherein the first distal indent 31 is a pin protruding from the lateral end surface 27, parallel to the distal axis X11, and the first proximal indent 32 is a pin protruding from the lateral end surface 27, parallel to the distal axis X11.

Example 5: The shock absorber 8 according to any one of examples 2 or 3, wherein the first distal indent 131 is a notch recessed from the lateral end surface 27, parallel to the distal axis X11, and the first proximal indent 132 is a notch recessed from the lateral end surface 27, parallel to the distal axis X11.

Example 6: The shock absorber 8 according to example 5, wherein the notch of the first distal indent 131 extends from an outer contour 138 of the lateral end surface 27 to an inner contour 139 of the lateral end surface 27 and wherein the notch of the first proximal indent 132 extends from the inner contour 139 of the lateral end surface 27.

Example 7: The shock absorber 8 according to any one of examples 1 to 6, wherein the shock absorber 8 further comprises a stem 13 and a piston 12 slidably fitted into each other and which are slid closer to each other when the shock absorber 8 is moved from the released configuration to the compressed configuration.

Example 8: The shock absorber 8 according to example 7, wherein the distal attachment 11 is fixedly secured the stem 13 and the proximal attachment 10 is fixedly secured to the piston 12.

Example 9: A cab suspension 4, comprising:
- at least one shock absorber 8 according to any one of examples 1 to 8; and
- the distal mounting 7, to which the inner sleeve 20 of said at least one shock absorber 8 is fixedly secured and comprising:
   - a lateral wall 24, to which the lateral end surface 27 of said at least one shock absorber 8 abuts parallel to the distal axis X11, and
   - a second anti-rotation element 40; 140, protruding from and/or recessed from the lateral wall 24, rotationally interlocked with the first anti-rotation element 30; 130 of said at least one shock absorber 8, thereby imposing the single rotational position of the inner sleeve 20 of said at least one shock absorber 8.

Example 10: The cab suspension 4 according to example 9, wherein:
- said at least one shock absorber 8 is according to any one of examples 2 to 6, wherein the second anti-rotation element 40; 140 comprises a second distal indent 41; 141 and a second proximal indent 42; 142, diametrically opposed to each other relative to the distal axis X11; and
- the second anti-rotation element 40; 140 is rotationally interlocked with the first anti-rotation element 30; 130 in that the first distal indent 31; 131 and the second distal indent 41; 141 are axially engaged into each other, and in that the first proximal indent 32; 132 and the second proximal indent 42; 142 are axially engaged into each other.

Example 11: The cab suspension 4 according to example 10, wherein the second proximal indent 42 comprises proximal oblique walls 45 converging towards the distal axis X11.

Example 12: The cab suspension 4 according to any one of examples 10 or 11, wherein said at least one shock absorber 8 is according to any one of examples 5 or 6, wherein the second distal indent 141 is a pin protruding from the lateral end surface 27, parallel to the distal axis X11, and the second proximal indent 142 is a pin protruding from the lateral end surface 27, parallel to the distal axis X11.

Example 13: The cab suspension 4 according to example 12, wherein the pin of the second proximal indent 142 forms an abutment end 144, wherein the notch of the first proximal indent 132 is in radial abutment against the abutment end 144 of the pin of the second proximal indent 142.

Example 14: The cab suspension 4 according to any one of examples 10 or 11, wherein said at least one shock absorber 8 is according to example 4, wherein:
- the lateral wall 24 includes a contour surface 28 delineating the through hole 25, and
- the second distal indent 41 is a notch recessed from the contour surface 28 parallel to the distal axis X11, and the second proximal indent 42 is a notch recessed from the contour surface 28 parallel to the distal axis X11.

Example 15: The cab suspension 4 according to example 14, wherein:
- the distal mounting 7 comprises a through hole 25 formed through the lateral wall 24, coaxially with the distal axis X11; and
- the notch of the second proximal indent 42 extends from a proximal edge 43 of the lateral wall 24 to the trough hole 25 and wherein the notch of the second distal indent 41 extends from the trough hole 25.

Example 16: The cab suspension 4 according to example 15, wherein the notch of the second distal indent 41 forms an abutment end 44 and extends from the through hole 25 to the abutment end 44, wherein the pin of the first distal indent 31 is in radial abutment against the abutment end 44.

Example 17: The cab suspension 4 according to any one of examples 9 to 16, wherein:
- the cab suspension 4 further comprises a bolt 22 coaxially inserted through the inner sleeve 20 and the lateral wall 24;
- the bolt 22 axially clamps the lateral wall 24 against the lateral end surface 27; and
- an axial clearance C30 is provided between the first anti-rotation element 30; 130 and the second anti-rotation element 40; 140.

Example 18: A vehicle 1, comprising:
- the cab suspension 4 according to any one of examples 9 to 17;
- a cab 3, to which the distal mounting 7 is secured; and
- a chassis 2, to which the proximal attachment 10 is secured.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A shock absorber (8), for a vehicle (1), wherein the shock absorber (8) is movable between a compressed configuration and a released configuration and comprises:
- a proximal attachment (10), for attaching the shock absorber (8) to a proximal mounting (6) of the vehicle (1); and
- a distal attachment (11), which is brought closer to the proximal attachment (10) when the shock absorber (8) is moved from the released configuration to the compressed configuration, the distal attachment (11) comprising a flexible bush (19) and an inner sleeve (20) received within the flexible bush (19) or formed integrally with the flexible bush (19),
wherein the inner sleeve (20):
- is coaxial with a distal axis (X11) transversal to a main axis (R8) crossing the proximal attachment (10) and the distal attachment (11);
- is configured for attaching the shock absorber (8) to a distal mounting (7) of the vehicle (1), by fixedly securing the inner sleeve (20) to the distal mounting (7); and
- comprises a lateral end surface (27) and a first anti-rotation element (30; 130), protruding from and/or recessed from the lateral end surface (27), parallel to the distal axis (X11), for imposing a single rotational position of the inner sleeve (20) around the distal axis (X11), relative to the distal mounting (7), when the inner sleeve (20) is secured to the distal mounting (7).

2. The shock absorber (8) according to claim 1, wherein the first anti-rotation element (30; 130) comprises a first distal indent (31; 131) and a first proximal indent (32; 132), diametrically opposed to each other relative to the distal axis (X11), either both protruding from the lateral end surface (27) or both recessed from the lateral end surface (27), wherein the first distal indent (31; 131) is arranged away from the proximal attachment (10) and wherein the first proximal indent (32; 132) is arranged towards the proximal attachment (10).

3. The shock absorber (8) according to claim 2, wherein the first proximal indent (132) comprises first proximal oblique walls (135) converging away from the distal axis (X11).

4. The shock absorber (8) according to any one of claims 2 or 3, wherein the first distal indent (31) is a pin protruding from the lateral end surface (27), parallel to the distal axis (X11), and the first proximal indent (32) is a pin protruding from the lateral end surface (27), parallel to the distal axis (X11).

5. The shock absorber (8) according to any one of claims 2 or 3, wherein the first distal indent (131) is a notch recessed from the lateral end surface (27), parallel to the distal axis (X11), and the first proximal indent (132) is a notch recessed from the lateral end surface (27), parallel to the distal axis (X11).

6. The shock absorber (8) according to claim 5, wherein the notch of the first distal indent (131) extends from an outer contour (138) of the lateral end surface (27) to an inner contour (139) of the lateral end surface (27) and wherein the notch of the first proximal indent (132) extends from the inner contour (139) of the lateral end surface (27).

7. A cab suspension (4), comprising:
- at least one shock absorber (8) according to any one of the preceding claims; and
- the distal mounting (7), to which the inner sleeve (20) of said at least one shock absorber (8) is fixedly secured and comprising:
- a lateral wall (24), to which the lateral end surface (27) of said at least one shock absorber (8) abuts parallel to the distal axis (X11), and
- a second anti-rotation element (40; 140), protruding from and/or recessed from the lateral wall (24), rotationally interlocked with the first anti-rotation element (30; 130) of said at least one shock absorber (8), thereby imposing the single rotational position of the inner sleeve (20) of said at least one shock absorber (8).

8. The cab suspension (4) according to claim 7, wherein:
- said at least one shock absorber (8) is according to any one of claims 2 to 6, wherein the second anti-rotation element (40; 140) comprises a second distal indent (41; 141) and a second proximal indent (42; 142), diametrically opposed to each other relative to the distal axis (X11); and
- the second anti-rotation element (40; 140) is rotationally interlocked with the first anti-rotation element (30; 130) in that the first distal indent (31; 131) and the second distal indent (41; 141) are axially engaged into each other, and in that the first proximal indent (32; 132) and the second proximal indent (42; 142) are axially engaged into each other.

9. The cab suspension (4) according to claim 8, wherein the second proximal indent (42) comprises proximal oblique walls (45) converging towards the distal axis (X11).

10. The cab suspension (4) according to any one of claims 8 or 9, wherein said at least one shock absorber (8) is according to any one of claims 5 or 6, wherein the second distal indent (141) is a pin protruding from the lateral end surface (27), parallel to the distal axis (X11), and the second proximal indent (142) is a pin protruding from the lateral end surface (27), parallel to the distal axis (X11).

11. The cab suspension (4) according to claim 10, wherein the pin of the second proximal indent (142) forms an abutment end (144), wherein the notch of the first proximal indent (132) is in radial abutment against the abutment end (144) of the pin of the second proximal indent (142).

12. The cab suspension (4) according to any one of claims 8 or 9, wherein said at least one shock absorber (8) is according to claim 4, wherein:
- the lateral wall (24) includes a contour surface (28) delineating the through hole (25), and
- the second distal indent (41) is a notch recessed from the contour surface (28) parallel to the distal axis (X11), and the second proximal indent (42) is a notch recessed from the contour surface (28) parallel to the distal axis (X11).

13. The cab suspension (4) according to claim 12, wherein:
- the distal mounting (7) comprises a through hole (25) formed through the lateral wall (24), coaxially with the distal axis (X11); and
- the notch of the second proximal indent (42) extends from a proximal edge (43) of the lateral wall (24) to the trough hole (25) and wherein the notch of the second distal indent (41) extends from the trough hole (25);
wherein the notch of the second distal indent (41) preferably forms an abutment end (44) and extends from the through hole (25) to the abutment end (44) and the pin of the first distal indent (31) is in radial abutment against the abutment end (44).

14. The cab suspension (4) according to any one of claims 7 to 13, wherein:
- the cab suspension (4) further comprises a bolt (22) coaxially inserted through the inner sleeve (20) and the lateral wall (24);
- the bolt (22) axially clamps the lateral wall (24) against the lateral end surface (27); and
- an axial clearance (C30) is provided between the first anti-rotation element (30; 130) and the second anti-rotation element (40; 140).

15. A vehicle (1), comprising:
- the cab suspension (4) according to any one of claims 7 to 14;
- a cab (3), to which the distal mounting (7) is secured; and
- a chassis (2), to which the proximal attachment (10) is secured.

## Amended claims

### Amended claims in accordance with Rule 137(2) EPC.

1. A shock absorber (8), for a vehicle (1), wherein the shock absorber (8) is movable between a compressed configuration and a released configuration and comprises:
- a proximal attachment (10), for attaching the shock absorber (8) to a proximal mounting (6) of the vehicle (1); and
- a distal attachment (11), which is brought closer to the proximal attachment (10) when the shock absorber (8) is moved from the released configuration to the compressed configuration, the distal attachment (11) comprising a flexible bush (19) and an inner sleeve (20) received within the flexible bush (19) or formed integrally with the flexible bush (19),
wherein the inner sleeve (20):
- is coaxial with a distal axis (X11) transversal to a main axis (R8) crossing the proximal attachment (10) and the distal attachment (11);
- is configured for attaching the shock absorber (8) to a distal mounting (7) of the vehicle (1), by fixedly securing the inner sleeve (20) to the distal mounting (7); and
- comprises a lateral end surface (27) and a first anti-rotation element (30; 130), protruding from and/or recessed from the lateral end surface (27), parallel to the distal axis (X11), for imposing a single rotational position of the inner sleeve (20) around the distal axis (X11), relative to the distal mounting (7), when the inner sleeve (20) is secured to the distal mounting (7),
**characterized in that**:
- the distal attachment (11) is configured to be attached to the distal mounting (7) by insertion of the distal attachment (11) inside the distal mounting (7) along a diametric axis (R30), perpendicular to the distal axis (X11), crossing the distal axis (X11), and parallel or slightly inclined relative to the main axis (R8); and
- the first anti-rotation element (30; 130) comprises a first distal indent (31; 131) and a first proximal indent (32; 132), which are:
- arranged along the diametric axis (R30) and diametrically opposed to each other relative to the distal axis (X11), or
- aligned with an axis parallel to the diametric axis (R30),
for enabling insertion of the distal attachment (11) into the distal mounting (7) along the diametric axis (R30).

2. The shock absorber (8) according to claim 1, wherein the first distal indent (31; 131) and the first proximal indent (32; 132) are diametrically opposed to each other relative to the distal axis (X11) and either both protrude from the lateral end surface (27) or are both recessed from the lateral end surface (27), wherein the first distal indent (31; 131) is arranged away from the proximal attachment (10) and wherein the first proximal indent (32; 132) is arranged towards the proximal attachment (10).

3. The shock absorber (8) according to claim 2, wherein the first proximal indent (132) comprises first proximal oblique walls (135) converging away from the distal axis (X11).

4. The shock absorber (8) according to any one of claims 2 or 3, wherein the first distal indent (31) is a pin protruding from the lateral end surface (27), parallel to the distal axis (X11), and the first proximal indent (32) is a pin protruding from the lateral end surface (27), parallel to the distal axis (X11).

5. The shock absorber (8) according to any one of claims 2 or 3, wherein the first distal indent (131) is a notch recessed from the lateral end surface (27), parallel to the distal axis (X11), and the first proximal indent (132) is a notch recessed from the lateral end surface (27), parallel to the distal axis (X11).

6. The shock absorber (8) according to claim 5, wherein the notch of the first distal indent (131) extends from an outer contour (138) of the lateral end surface (27) to an inner contour (139) of the lateral end surface (27) and wherein the notch of the first proximal indent (132) extends from the inner contour (139) of the lateral end surface (27).

7. A cab suspension (4), comprising:
- at least one shock absorber (8) according to any one of the preceding claims; and
- the distal mounting (7), to which the inner sleeve (20) of said at least one shock absorber (8) is fixedly secured and comprising:
- a lateral wall (24), to which the lateral end surface (27) of said at least one shock absorber (8) abuts parallel to the distal axis (X11), and
- a second anti-rotation element (40; 140), protruding from and/or recessed from the lateral wall (24), rotationally interlocked with the first anti-rotation element (30; 130) of said at least one shock absorber (8), thereby imposing the single rotational position of the inner sleeve (20) of said at least one shock absorber (8).

8. The cab suspension (4) according to claim 7, wherein:
- said at least one shock absorber (8) is according to any one of claims 2 to 6, wherein the second anti-rotation element (40; 140) comprises a second distal indent (41; 141) and a second proximal indent (42; 142), diametrically opposed to each other relative to the distal axis (X11); and
- the second anti-rotation element (40; 140) is rotationally interlocked with the first anti-rotation element (30; 130) in that the first distal indent (31; 131) and the second distal indent (41; 141) are axially engaged into each other, and in that the first proximal indent (32; 132) and the second proximal indent (42; 142) are axially engaged into each other.

9. The cab suspension (4) according to claim 8, wherein the second proximal indent (42) comprises proximal oblique walls (45) converging towards the distal axis (X11).

10. The cab suspension (4) according to any one of claims 8 or 9, wherein said at least one shock absorber (8) is according to any one of claims 5 or 6, wherein the second distal indent (141) is a pin protruding from the lateral end surface (27), parallel to the distal axis (X11), and the second proximal indent (142) is a pin protruding from the lateral end surface (27), parallel to the distal axis (X11).

11. The cab suspension (4) according to claim 10, wherein the pin of the second proximal indent (142) forms an abutment end (144), wherein the notch of the first proximal indent (132) is in radial abutment against the abutment end (144) of the pin of the second proximal indent (142).

12. The cab suspension (4) according to any one of claims 8 or 9, wherein said at least one shock absorber (8) is according to claim 4, wherein:
- the lateral wall (24) includes a contour surface (28) delineating the through hole (25), and
- the second distal indent (41) is a notch recessed from the contour surface (28) parallel to the distal axis (X11), and the second proximal indent (42) is a notch recessed from the contour surface (28) parallel to the distal axis (X11).

13. The cab suspension (4) according to claim 12, wherein:
- the distal mounting (7) comprises a through hole (25) formed through the lateral wall (24), coaxially with the distal axis (X11); and
- the notch of the second proximal indent (42) extends from a proximal edge (43) of the lateral wall (24) to the trough hole (25) and wherein the notch of the second distal indent (41) extends from the trough hole (25);
wherein the notch of the second distal indent (41) preferably forms an abutment end (44) and extends from the through hole (25) to the abutment end (44) and the pin of the first distal indent (31) is in radial abutment against the abutment end (44).

14. The cab suspension (4) according to any one of claims 7 to 13, wherein:
- the cab suspension (4) further comprises a bolt (22) coaxially inserted through the inner sleeve (20) and the lateral wall (24);
- the bolt (22) axially clamps the lateral wall (24) against the lateral end surface (27); and
- an axial clearance (C30) is provided between the first anti-rotation element (30; 130) and the second anti-rotation element (40; 140).

15. A vehicle (1), comprising:
- the cab suspension (4) according to any one of claims 7 to 14;
- a cab (3), to which the distal mounting (7) is secured; and
- a chassis (2), to which the proximal attachment (10) is secured.
